# EUROPÄISCHE PATENTSCHRIFT

(11) **EP 3 740 708 B1**
(45) Veröffentlichungstag und Bekanntmachung des Hinweises auf die Patenterteilung: **24.11.2021**
(21) Anmeldenummer: 19700491.4
(22) Anmeldetag: 11.01.2019
(51) Int. Cl.: F16K 31/56, F16K 31/385, F16K 1/52, F16K 31/524

(54) **VENTILBETÄTIGUNGSVORRICHTUNG**
VALVE ACTUATING DEVICE
DISPOSITIF D'ACTIONNEMENT DE SOUPAPE

(30) Priorität: 30.04.2018 DE 202018102401 U
(43) Veröffentlichungstag der Anmeldung: 25.11.2020
(73) Patentinhaber: Neoperl GmbH, 79379 Müllheim (DE)
(72) Erfinder: TEMPEL, Marc, 79111 Freiburg (DE); BIAN, Yichao, 79379 Müllheim-Hügelheim (DE)
(74) Vertreter: Mertzlufft-Paufler, Cornelius
(86) Internationale Anmeldenummer: PCT/EP2019/050690
(87) Internationale Veröffentlichungsnummer: WO 2019/211007

(56) Entgegenhaltungen:
- DE-A1-102016 006 388
- JP-A- 2001 098 596
- JP-A- 2012 145 145

## Beschreibung

Die Erfindung betrifft eine Ventilbetätigungsvorrichtung, mit einem Hauptventil und einem Hilfsventil, wobei das Hauptventil eine Schaltmembran hat, die zwischen einer Offenstellung und einer Schließstellung mit dem Hilfsventil verstellbar ist, wobei das Hilfsventil mit einem entlang einer Betätigungsrichtung beweglichen Handbedienelement über eine bistabile Mechanik betätigbar ist.

Derartige Ventilbetätigungsvorrichtungen sind bekannt und werden beispielsweise verwendet, um ein weiches Schaltverhalten und/oder ein Schalten mit niedrigen Betätigungskräften zu erreichen. Hierzu wird in der Regel ein Betriebsdruck des zu schaltenden Mediums verwendet, um - über das Hilfsventil - die Schaltmembran zu beaufschlagen oder freizugeben, sodass die Schließstellung oder die Offenstellung eingenommen wird.

Es ist bereits vorgeschlagen worden, dass hierzu das Handbedienelement mit einem zusätzlichen Bewegungsfreiheitsgrad ausgerüstet ist, um die Offenstellung einstellen zu können. Auf diese Weise kann erreicht werden, dass in der Offenstellung unterschiedliche Durchflussöffnungen am Hauptventil gebildet sind.

JP 2012 145145 A betrifft eine gattungsgemäße Ventilbetätigungsvorrichtung nach dem Oberbegriff aus Anspruch 1.

DE 10 2016 006 388 A1 betrifft eine Ventilbetätigungsvorrichtung mit einem ersten Ventil und einem zweiten Ventil, wobei an dem ersten Ventil eine Druckkammer ausgebildet ist, die über eine Befüllöffnung mit einem Druck aus einem ersten Zulauf befüllbar ist, wobei das erste Ventil den ersten Zulauf in einer Schließposition von einem ersten Ablauf trennt und wobei die Druckkammer über eine Ablauföffnung in den ersten Ablauf entleerbar ist und die Ablauföffnung mit einem durch ein Bedienelement ansteuerbares Verschlusselement geöffnet und verschlossen werden kann.

Der Erfindung liegt die Aufgabe zugrunde, eine Ventilbetätigungsvorrichtung mit verbesserten Gebrauchseigenschaften zu schaffen.

Zur Lösung dieser Aufgabe sind erfindungsgemäß die Merkmale von Anspruch 1 vorgesehen. Insbesondere wird somit erfindungsgemäß zur Lösung der genannten Aufgabe bei einer Ventilbetätigungsvorrichtung der eingangs beschriebenen Art vorgeschlagen, dass eine Schaltposition der bistabilen Mechanik, die die Offenstellung der bistabilen Mechanik definiert, durch eine Drehbewegung um die Betätigungsrichtung eines Verstellteils relativ zu dem Handbedienelement einstellbar ist. Somit ist eine zusätzliche Verstellmöglichkeit geschaffen, die losgelöst vom Handbedienelement ausgeführt werden kann. Dies hat beispielsweise den Vorteil, dass das Handbedienelement seine räumliche Orientierung nicht ändert, wenn das Verstellteil um die Betätigungsrichtung gedreht wird. Es ist somit beispielsweise eine Beschriftung des Handbedienelements ausbildbar, die bei allen Einstellungen in einer lesbaren Orientierung verbleibt.

Die Erfindung bietet den weiteren Vorteil, dass eine Durchflussmenge in der Offenstellung veränderlich ist. Dies ist insbesondere von Vorteil, wenn die Ventilbestätigungsvorrichtung im Zusammenhang mit einem Durchlauferhitzer mit konstanter Heizleistung oder mit begrenzter Heizleistung betrieben wird. Dann kann nämlich zum Beispiel jahreszeitenabhängig zwischen einer kleinen Durchflussmenge, die bei gleichbleibender Heizleistung und bei einer niedrigen Eingangstemperatur - beispielsweise im Winter - zu einer gewünschten Verbrauchstemperatur führt, und einer großen Durchflussmenge pro Zeiteinheit, die bei derselben Heizleistung und bei einer höheren Eingangstemperatur - beispielsweise im Sommer - zu derselben oder nahezu derselben Verbrauchstemperatur führen kann, gewählt werden.

Eine vorteilhafte Anwendung einer erfindungsgemäßen Ventilbestätigungsvorrichtung, insbesondere wie zuvor beschrieben und/oder nach einem der aus eine Ventilbestätigungsvorrichtung gerichteten Ansprüche, kann somit darin bestehen, dass eine Durchflussmenge mit dem Verstellteil auf eine Temperatur eines zuströmenden Wasserstroms abgestimmt wird, so dass eine Ausgangstemperatur eines zu der Ventilbestätigungsvorrichtung in Reihe, insbesondere stromabwärts, geschalteten, bevorzugt elektrischen, Duchlauferhitzers eine gewünschte Ausgangstemperatur erzeugt. Eine Regelung einer Heizleistung des Durchlauferhitzers ist somit verzichtbar.

Bei einer Ausgestaltung der Erfindung kann vorgesehen sein, dass das Verstellteil hülsenförmig ausgebildet ist. Von Vorteil ist dabei, dass eine platzsparende Ausgestaltung dadurch möglich ist, dass das Verstellteil um das Handbedienelement ausgebildet ist.

Es ist vorgesehen, dass das Verstellteil das Handbedienelement aufnimmt. Auch dies ermöglicht eine platzsparende Ausgestaltung und gleichzeitig eine Führung des Handbedienelements im Verstellteil.

Bei einer Ausgestaltung der Erfindung kann vorgesehen sein, dass das Verstellteil drehbar an einem zumindest die bistabile Mechanik aufnehmenden Gehäuse angeordnet ist. Somit ist eine einfache Art beschrieben, die Drehbewegung sicher ausführen zu können. Insbesondere sind somit versehentliche Verstellungen des Handbedienelements bei einer Verstellung des Verstellteils verhinderbar.

Es ist vorgesehen, dass das Handbedienelement entlang der Betätigungsrichtung linear verschieblich angeordnet ist. Dies ermöglicht eine einfache Betätigung des Hilfsventils, um das Hauptventil anzusteuern.

Insgesamt ist die Erfindung vorteilhaft einsetzbar bei solchen Ventilanordnungen, bei denen das Hilfsventil eine Entlastungsöffnung ansteuert, die beispielsweise in der Schaltmembran ausgebildet sein kann, wobei die Entlastungsöffnung eine durch die Schaltmembran begrenzte Druckkammer entlastet. Auf diese Weise sind ein Druckaufbau und ein Druckabbau hinter der Schaltmembran einfach realisierbar, welcher zum Schließen (bei Druckaufbau) beziehungsweise Öffnen (bei Druckabbau) des Hauptventils führt. Diese Druckkammer kann hierbei aus einer Zuleitung des Hauptventils gespeist sein.

Bei einer Ausgestaltung der Erfindung kann vorgesehen sein, dass das Verstellteil und das Handbedienelement unabhängig voneinander beweglich sind. Dies ermöglicht eine einfache und verständliche Trennung der unterschiedlichen Bedienfunktionalitäten.

Beispielsweise kann vorgesehen sein, dass das Handbedienelement drehfest geführt ist. Dies ermöglicht es, eine textliche oder grafische Bedruckung oder Markierung in einer festen Orientierung für den Betrachter anzubieten, sodass die Aufschrift oder die aufgedruckten Symbole einfach erkennbar sind.

Bei einer Ausgestaltung der Erfindung kann vorgesehen sein, dass die bistabile Mechanik eine Paarung eines Anschlagelements und einer unterschiedliche Anschlagpositionen bereitstellenden Anschlaglinie aufweist, die zur Definition der Offenstellung zusammenwirken. Auf diese Weise ist einfach ein verstellbarer Anschlag bereitstellbar, mit welchem die bereits erwähnte Offenstellung der bistabilen Mechanik einstellbar ist.

Beispielweise kann vorgesehen sein, dass mit dem Verstellteil einer Relativposition des Anschlagelements an der Anschlaglinie verstellbar ist. Dies ermöglicht eine einfache Umsetzung der Verstellbewegung am Verstellteil in eine Einstellung der zugehörigen Schaltposition.

Beispielsweise kann die Anschlaglinie unterbrechungsfrei ausgebildet sein. Es ist somit ein einfaches Gleiten des Anschlags auf der Anschlaglinie erreichbar. Dies ist beispielsweise günstig, wenn die Einstellung der Schaltposition in der Offenstellung der bistabilen Mechanik erfolgen soll.

Alternativ oder zusätzlich kann vorgesehen sein, dass die Anschlaglinie gestuft ausgebildet ist. Von Vorteil ist dabei, dass ein selbsttätiges Verstellen der Schaltposition durch Erschütterungen oder dergleichen vermeidbar ist und/oder dasa ein Verstellen des Anschlags entlang der Anschlaglinie haptisch erfassbar ist.

Bei einer Ausgestaltung der Erfindung kann vorgesehen sein, dass wenigstens ein Drehanschlag für eine Verstellrichtung der Relativposition ausgebildet ist. Von Vorteil ist dabei, dass zumindest in einer Verstellrichtung dem Benutzer fühlbar anzeigbar ist, dass eine weitere Verstellung der Relativposition nicht möglich ist. Besonders günstig ist es, wenn der Drehanschlag zu einer Begrenzung einer Anschlaglinie, beispielsweise der bereits erwähnten Anschlaglinie in der Verstellrichtung der Relativposition ausgebildet ist. Somit ist eine Korrespondenz zwischen einer Endposition der Verstellrichtung und einer Endposition des Anschlags an der Anschlaglinie erreichbar. Besonders günstig ist es, wenn wenigstens zwei Drehanschläge ausgebildet sind. Somit ist die Verstellrichtung beidseitig begrenzbar. Es ist somit eine obere und eine untere Position der Offenstellung der bistabilen Mechanik definierbar.

Alternativ kann vorgesehen sein, dass die Anschlaglinie umlaufend ausgebildet ist. Von Vorteil ist dabei, dass Drehanschläge verzichtbar sind. Hierbei kann vorgesehen sein, dass die Anschlaglinien wenigstens einen Umkehrpunkt und/oder einen oberen Umkehrpunkt definiert. Es ist/sind eine untere und/oder eine obere Stellung der Offenstellung einfach definierbar. Alternativ oder zusätzlich kann hierdurch erreichbar sein, dass die Anschlaglinie wenigstens einen ansteigenden Abschnitt und/oder einen abfallenden Abschnitt aufweist. Bevorzugt folgt auf den wenigstens einen ansteigenden Abschnitt wenigstens ein Abschnitt abfallender Art und umgekehrt.

Bei einer Ausgestaltung der Erfindung kann vorgesehen sein, dass die bistabile Mechanik als Kugelschreibermechanik ausgebildet ist. Dies stellt eine besonders einfach handhabbare Umsetzung einer bistabilen Mechanik dar.

Insbesondere kann hierbei vorgesehen sein, dass mit dem Verstellteil eine Position eines Anschlags, beispielsweise des bereits erwähnten Anschlags, für eine Arbeitsbewegung der Kugelschreibermechanik einstellbar ist. Dieser Anschlag kann bevorzugt die Offenstellung definieren. Günstig ist hierbei, wenn durch Einstellung der Position des Anschlags auf einfache Weise die Schaltposition veränderbar ist.

Die Erfindung wird nun anhand von Ausführungsbeispielen näher beschrieben, ist aber nicht auf diese Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt:
- Fig. 1: eine erfindungsgemäße Ventilbetätigungsvorrichtung in dreidimensionaler Schrägansicht,
- Fig. 2: die Ventilbetätigungsvorrichtung gemäß Figur 1 in einer Längsschnittdarstellung,
- Fig. 3: eine Explosionsdarstellung mit teilweise aufgeschnittenen Bestandteilen der bistabilen Mechanik der Ventilbetätigungsvorrichtung gemäß Figur 1,
- Fig. 4: eine Darstellung analog zu Figur 3 aus einer geänderten Betrachterposition,
- Fig. 5: eine Prinzipskizze zur Erläuterung eines Schaltverhaltens der bistabilen Mechanik gemäß Figur 3 und 4,
- Fig. 6: eine Darstellung gemäß Figur 2 mit geschlossenem Hauptventil und niedergedrücktem Handbedienelement in der unteren Schaltposition der bistabilen Mechanik,
- Fig. 7: die Ventilbetätigungsvorrichtung gemäß Figur 1 mit geöffnetem Hauptventil und Handbedienelement in einer oberen Position sowie mit der zugehörigen Schaltposition der bistabilen Mechanik,
- Fig. 8: eine Darstellung analog zu den Figuren 6 und 7, wobei das Hautventil geöffnet ist und die Schaltposition zur Offenstellung auf einen mittleren Wert eingestellt ist,
- Fig. 9: eine Darstellung analog zu Figur 8, wobei die Offenstellung der bistabilen Mechanik auf einen oberen Wert eingestellt ist,
- Fig. 10: eine Darstellung analog zu den Figuren 6 bis 9, wobei das Hauptventil geschlossen ist und das Handbedienelement unter die untere Schaltposition gedrückt ist,
- Fig. 11: eine teilweise aufgeschnittene Darstellung zu Figur 1,
- Fig. 12: eine weitere teilweise aufgeschnittene Darstellung zu Figur 1,
- Fig. 13: eine dreidimensionale Schrägansicht des Handbedienelements der Ventilbetätigungsvorrichtung gemäß Figur 1,
- Fig. 14: eine erste Seitenansicht auf das Handbedienelement gemäß Figur 13,
- Fig. 15: eine zweite, aus einer um 90 Grad gedrehten Aufnahmeposition dargestellte Seitenansicht des Handbedienelements gemäß Figur 11,
- Fig. 16: ein weiteres Handbedienelement in einer dreidimensionalen Schrägansicht, das statt des Handbedienelements gemäß Figur 13 bei der Ventilbetätigungsvorrichtung gemäß Figur 1 einsetzbar ist,
- Fig. 17: eine zu Figur 14 entsprechende Seitenansicht zu Figur 16,
- Fig. 18: eine Figur 15 entsprechende Seitenansicht zu Figur 16 und
- Fig. 19: die abgewickelte Anschlaglinie des Handbedienelements gemäß Figur 16.

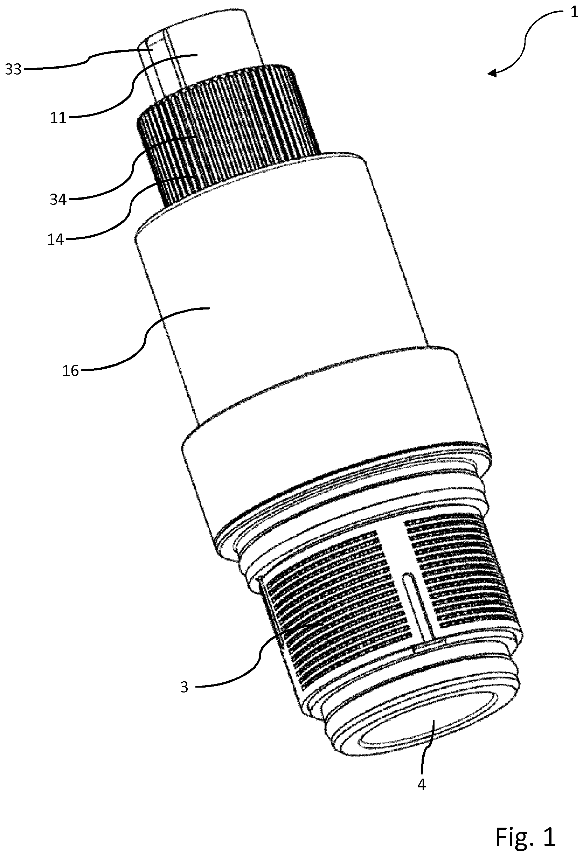

Zunächst werden die Figuren 1 bis 4, 11 und 12 gemeinsam beschrieben.

Hierbei zeigt die Figur 1 die dreidimensionale Außenansicht auf eine im Ganzen mit 1 bezeichnete Ventilbetätigungsvorrichtung.

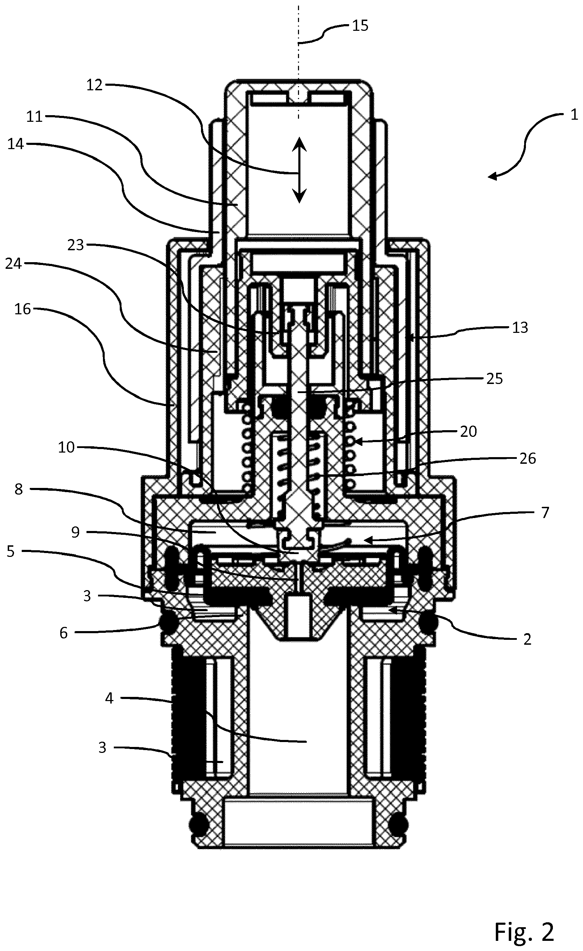

In der Schnittdarstellung gemäß Figur 2 ist erkennbar, dass die Ventilbetätigungsvorrichtung 1 ein Hauptventil 2 aufweist, mit welchem Durchfluss von einem Zulauf 3 zu einem Ablauf 4 zu unterbrochen beziehungsweise freigegeben werden kann.

Hierzu weist das Hauptventil 2 in an sich bekannter Weise eine Schaltmembran 5 auf, mit welcher ein Ventilsitz 6 verschließbar und freigebbar ist.

Zur Ansteuerung des Hauptventils 2 ist ein Hilfsventil 7 ausgebildet.

In ebenfalls an sich bekannter Weise schließt die Schaltmembran 5 eine Druckkammer 8 ab, welche über eine Entlastungsöffnung 9 mit dem Ablauf 4 verbunden ist.

Das Hilfsventil 7 hat ein Ventilelement 10, mit welchem die Entlassungsöffnung 9 geöffnet und verschlossen werden kann.

Ist die Entlastungsöffnung 9 geöffnet, so entleert sich die Druckkammer 8, und die Schaltmembran 5 entfernt sich von dem ventilsitz 6 aufgrund des Drucks im Zulauf 3.

Wird die Entlastungsöffnung 9 verschlossen, so baut sich in der Druckkammer 8 ein Druck auf, da die Druckkammer 8 beispielsweise aus dem Zulauf 3 in nicht weiter dargestellter Weise befüllbar ist.

Dies bewirkt, dass die Schaltmembran 5 gegen den Ventilsitz 6 gedrückt wird.

Zur Betätigung des Hilfsventils 7 ist ein Handbedienelement 11 ausgebildet, welches entlang einer Betätigungsrichtung 12 linear verschieblich angeordnet ist.

In einer Wirkverbindung zwischen dem Handbedienelement 11 und dem Hilfsventil 7 ist eine bistabile Mechanik 13 ausgebildet, welche in noch genauer zu beschreibender Weise die Offenstellung und die Schließstellung des Hilfsventils 7 und somit die Offenstellung und die Schließstellung der Schaltmembran 5 definiert.

Die Ventilbetätigungsvorrichtung 1 hat ferner ein Verstellteil 14, das um eine Drehachse 15, die parallel zu der Betätigungsrichtung 12 ausgerichtet ist, relativ zu dem Handbedienelement 11 drehbar ist.

In noch genauer zu beschreibender Weise dient das Verstellteil 14 dazu, die Position der Offenstellung des Hilfsventils 7 und somit der Schaltmembran 5 des Hauptventils 2 zu verändern.

Das Verstellteil 14 ist hierbei hülsenförmig ausgestaltet und umgibt das Handbedienelement 11 in Umfangsrichtung allseitig und nimmt dieses auf.

Um die Drehbarkeit zu gewährleisten, ist das Verstellteil 14 drehbar an einem Gehäuseteil 16 angeordnet, welches das Hauptventil 2, das Hilfsventil 7 und die bistabile Mechanik 13 gehäusebildend aufnimmt.

Das Handbedienelement 11 und das Verstellteil 14 sind somit unabhängig voneinander beweglich angeordnet.

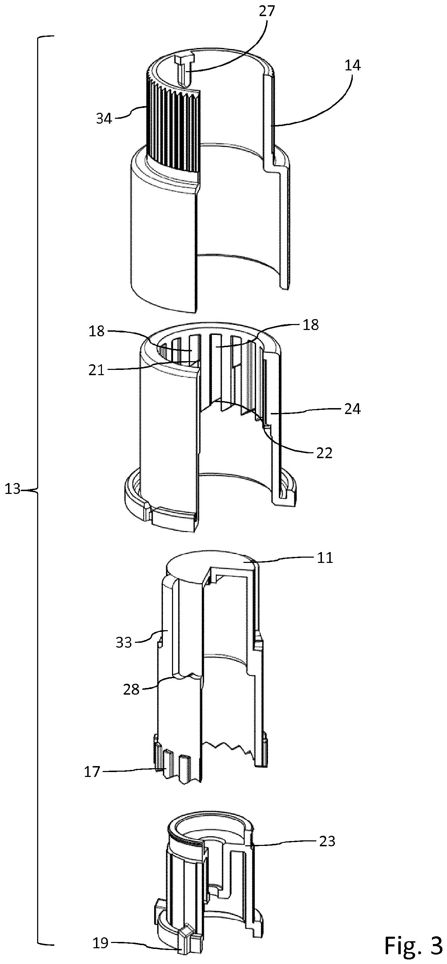

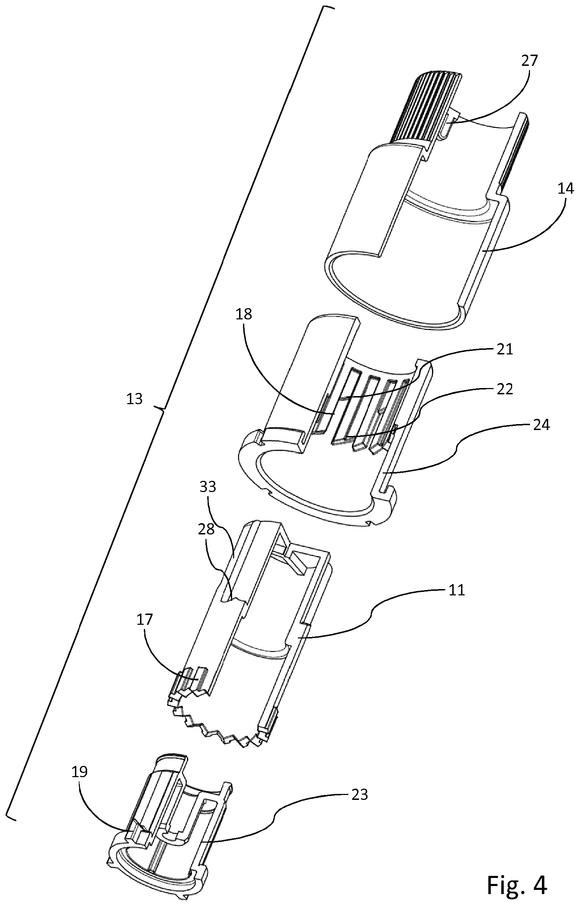

In den Figuren 3 und 4 ist die bistabile Mechanik 13 näher dargestellt. Im Ausführungsbeispiel ist die bistabile Mechanik 13 als an sich bekannte Kugelschreibermechanik ausgebildet. Es sind jedoch auch andere bistabile Mechaniken verwendbar.

Die bistabile Mechanik 13 weist hierzu Führungsvorsprünge 17 auf, die in Führungsbahnen 18 laufen.

Diese Führungsvorsprünge 17 verdrängen bei Betätigung des Handbedienelements 11 Steuervorsprünge 19, die ebenfalls in den Führungsbahnen 18 laufen, bis die Steuervorsprünge 19 die Führungsbahn 18 verlassen.

Eine Anschrägung der Führungsvorsprünge 17 einerseits und zwischen zwei benachbarten Führungsbahnen 18 andererseits führt in an sich bekannter Weise dazu, dass bei einer Entlastung der Führungsvorsprünge 17 eine Rückstellfeder 20 die Steuervorsprünge 19 jeweils in die benachbarte Führungsbahn 18 drängt.

In jeder Führungsbahn 18 ist ein Anschlag 21, der eine obere Stellung der bistabilen Mechanik 13 definiert, oder ein Anschlag 22, der eine untere Stellung der bistabilen Mechanik 13 definiert, ausgebildet.

Die Anschläge 21, 22 sind hierbei so dimensioniert, dass sie die Bewegung der Steuervorsprünge 19 begrenzen, der Führungsvorsprünge 17 dagegen nicht.

Die Führungsvorsprünge 17 sind hierbei an dem bereits erwähnten Handbedienelement 11 ausgebildet. Die Steuervorsprünge 19 sind an einem Innenteil 23 ausgebildet, welches drehbar in dem Handbedienelement 11 angeordnet ist.

Das Handbedienelement 11 ist in einem hülsenförmigen Zwischenteil 24 angeordnet, welches an seiner Innenseite die Führungsbahnen 18 ausbildet.

In Figur 2 ist ersichtlich, dass das Innenteil 23 mit einem Stößel 25 des Hilfsventils 7 in Wirkverbindung steht, welcher an seinem vom Innenteil 23 abgewandten Ende das Ventilelement 10 des Hilfsventils 7 trägt.

Wie aus Figur 2 ersichtlich ist, kann das Innenteil 23 den Stößel 25 nur auf Zug belasten. Ein Federelement 26 führt den Stößel 25 mit, wenn das Innenteil 23 nach unten bewegt wird, bis das Ventilelement 10 anliegt.

Auf diese Weise ist erreicht, dass die oberen Anschläge 21 die obere Stellung des Ventilelements 10 definieren, während die Anschläge 22 die untere Stellung des Ventilelements 10 festlegen.

Die erwähnte Freiheit zwischen dem Innenteil 23 und dem Stößel 25 führt dazu, dass das Innenteil 23 während eines Schaltvorgangs tiefer bewegt werden kann, als dies für den Stößel 25 möglich wäre, um eine Rückholbewegung einzuleiten.

An dem Verstellteil 14 sind innenseitig Anschlagelemente 27 ausgebildet, welche mit einer Anschlaglinie 28, die außenseitig an dem Handbedienelement 11 angeordnet ist, zusammenwirken.

Da das Verstellteil 14 in axialer Richtung, also längs der Betätigungsrichtung 12, fixiert ist, begrenzt das Anschlagelement 27 zusätzlich die Beweglichkeit des Handbedienelements 11 und somit auch den Arbeitshub der bistabilen Mechanik 13 nach oben.

Die Anschlaglinie 28 ist hierbei in eine Abfolge von Segmenten 29 unterteilt, die jeweils eine unterschiedliche axiale Position beschreiben. Hierdurch ist die Beweglichkeit des Handbedienelements 11 je nach Drehposition relativ zu dem Anschlagelement 27 unterschiedlich begrenzt.

Eine Verdrehung des Verstellteils 14 führt somit dazu, dass die Beweglichkeit des Handbedienelements 11 nach oben mehr oder weniger stark begrenzt ist.

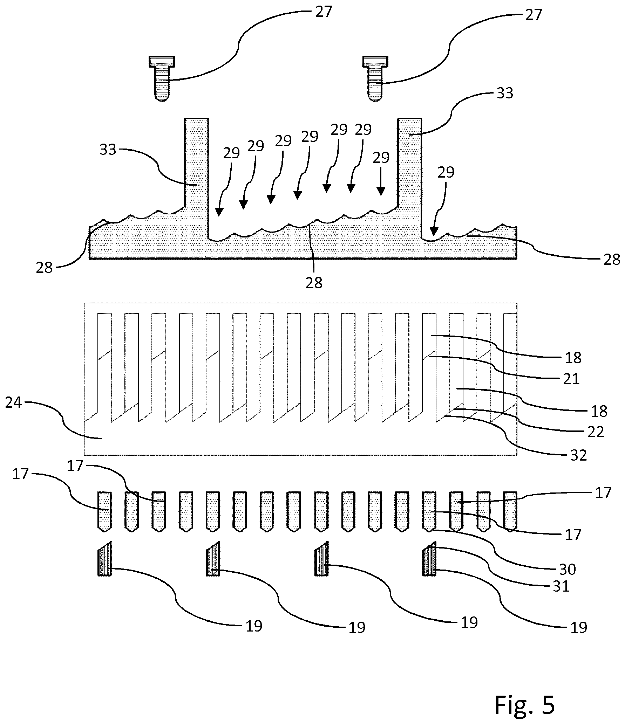

Figur 5 zeigt von oben nach unten die abgewickelte Position der Anschlagelemente 27, darunter die abgewickelte Form am Handbedienelement 11, darunter die abgewickelte Innenform an dem Zwischenteil 24 mit den Führungsbahnen 18, darunter die abgewickelte Position der Führungsvorsprünge 17, die außenseitig unterhalb der Anschlaglinie 28 am Handbedienelement 11 ausgebildet sind, und darunter die abgewickelte Position der Steuervorsprünge 19 an dem Innenteil 23.

Aus der Figur 5 ist ersichtlich, dass die Führungsvorsprünge 17, die in den Führungsbahnen 18 laufen, an ihrem vorderen Ende eine Schräge 30 aufweisen, welche mit einer entsprechenden Schräge 31 an den Steuervorsprüngen 19, die ebenfalls in den Führungsbahnen 18 geführt werden, derart zusammenwirkt, so dass dann, wenn ein Steuervorsprung 19 aus der Führungsbahn 18 herausgedrängt wird, dieser Steuervorsprung 19 geringfügig nach rechts verschoben wird. Bei einer Rückführung des Steuervorsprungs 19 gelangt dessen Schräge 31 in Kontakt mit einer Schräge 32 zwischen zwei Führungsbahnen 18, sodass der Steuervorsprung 19 um ein Winkelinkrement gedreht und in die benachbarte Führungsbahn 18 geführt wird.

Aus Figur 5 ist ersichtlich, dass die Führungsbahnen 18 abwechselnd unterschiedlich hohe Anschläge 21, 22 ausbilden. Diese Anschläge sind für die Steuervorsprünge 19 ausgebildet, sodass die Steuervorsprünge 19 in den Führungsbahnen 18 entweder an dem oberen Anschlag 21 und an dem unteren Anschlag 22 anliegen.

Aus Figur 5 ist weiter ersichtlich, dass die Anschlaglinie 28 unterbrechungsfrei und gestuft ausgebildet ist, wobei die einzelnen Stufen jeweils ein Segment 29 definieren.

Es ist ersichtlich, dass jede Stufe, die durch ein Segment 29 definiert wird, einen anderen Kontaktpunkt mit dem Anschlagelement 27 definiert. Da das Anschlagelement 27 an dem Verstellteil 14 ausgebildet ist, welches in axialer Richtung unbeweglich ist, verbleibt das Anschlagelement 27 raumfest. Demgegenüber wird die Anschlaglinie 28 gemeinsam mit den Führungsvorsprüngen 17 an dem Handbedienelement 11 bei Entlastung des Handbedienelements 11 nach oben geführt. Die Anschlaglinie 28 ist hierbei so angeordnet, dass die Mehrzahl der Segmente 29 oder sogar alle Segmente 29 mit Ausnahme des untersten Segments 29 mit dem Anschlagelement 27 in Kontakt geraten, bevor der Steuervorsprung 19 den oberen Anschlag 21 kontaktiert.

Somit ist die Beweglichkeit des Steuervorsprung 19 und somit des Innenteils 23 gegenüber dem Verstellweg, der durch die Anschläge 21 und 22 gebildet ist, noch weiter reduziert.

Auf diese Weise gelingt es, durch Relativposition des Anschlagelements 27 auf der Anschlaglinie 28 die Offenstellung des Ventils weiter zu vergrößern oder zu vermindern.

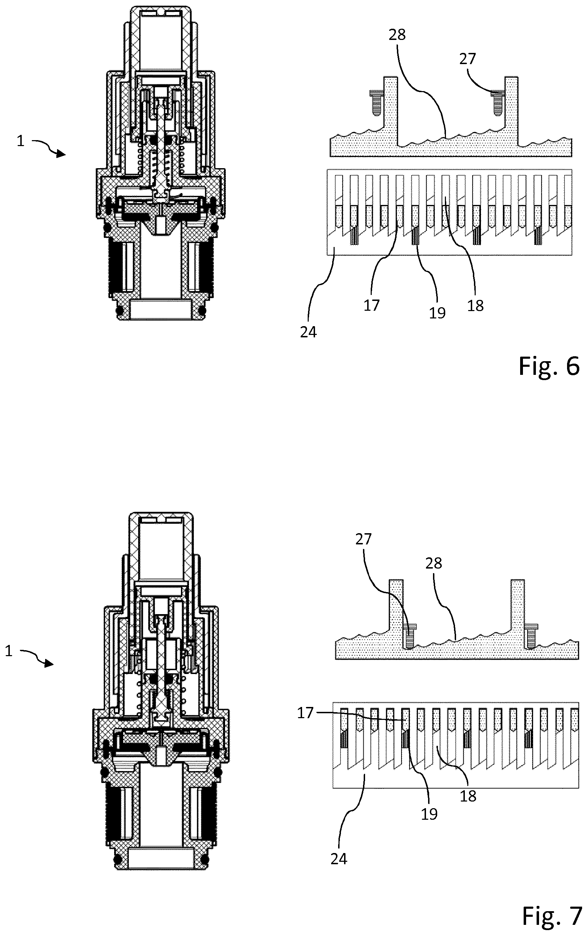

Diesen Effekt zeigen die Figuren 6 bis 10.

Figur 6 zeigt hierbei die Stellung, in der die Steuervorsprünge 19 an den unteren Anschlag 22 anliegen.

In der daneben gezeichneten Schnittdarstellung, zu deren näherer Erläuterung auf die Figur 2 verwiesen wird, ist die entsprechende Stellung des Ventilelements 10 gezeigt. Dieses verschließt die Entlastungsöffnung 9, sodass - in der bereits beschriebenen Weise - die Schaltmembran 5 gegen den Ventilsitz 6 gedrückt wird. Das Hauptventil 2 ist somit geschlossen.

Es ist ersichtlich, dass die Anschlagelemente 27 hier oberhalb der Anschlaglinie 28 in Abstand zu dieser angeordnet sind, sodass hier keine weitere Begrenzung vorliegt.

Wird nun das Handbedienelement 11 nach unten gedrückt, so gelangt jeder der Steuervorsprünge 19 in die jeweils benachbarte Führungsbahn 18, die nun den oberen Anschlag 21 enthält. Dies zeigt beispielhaft die Figur 7. In dieser Figur ist das Anschlagelement 27 so positioniert, dass es in dem Segment 29 angeordnet ist, welches die am weitesten oben gelegene Position des Handbedienelements 11 ermöglicht.

Dementsprechend ist das Ventilelement 10 von der Entlastungsöffnung 9 entfernt, sodass die Druckkammer 8 entlastet ist und das Hauptventil 2 geöffnet ist.

Wird nun - entweder nach zwischengeschalteten Schaltvorgängen der bistabilen Mechanik 13 oder direkt in der Stellung von Figur 7 - das Verstellteil 14 so gedreht, dass das Anschlagelement 27 die Anschlaglinie 28 entlangwandert, so wird das Handbedienelement 11 eine Position einnehmen, die gegenüber Figur 7 etwas tiefer ist.

In dieser Position befindet sich die Schaltmembran 5 noch nicht auf dem Ventilsitz 6, jedoch ist die Entlastungsöffnung 9 durch das Ventilelement 10 verschlossen. Es baut sich somit ein Druck in der Druckkammer 8 auf, der dazu führt, dass sich die Schaltmembran 5 etwas nach unten bewegt. In dieser Situation ist die Entlastungsöffnung 9 wieder freigegeben, sodass der Druck abnimmt, bis die Schaltmembran wieder die Entlastungsöffnung 9 gegen das Ventilelement 10 drückt, wodurch die Druckkammer 8 verschlossen ist.

Auf diese Weise stellt sich ein zwischengelagerter Gleichgewichtszustand ein, in dem der Ventilsitz 6 etwas weniger geöffnet ist, als dies in Figur 7 der Fall war. Der lichte Öffnungsquerschnitt des Ventilsitzes 6 ist somit in dieser Stellung gegenüber Figur 7 vermindert.

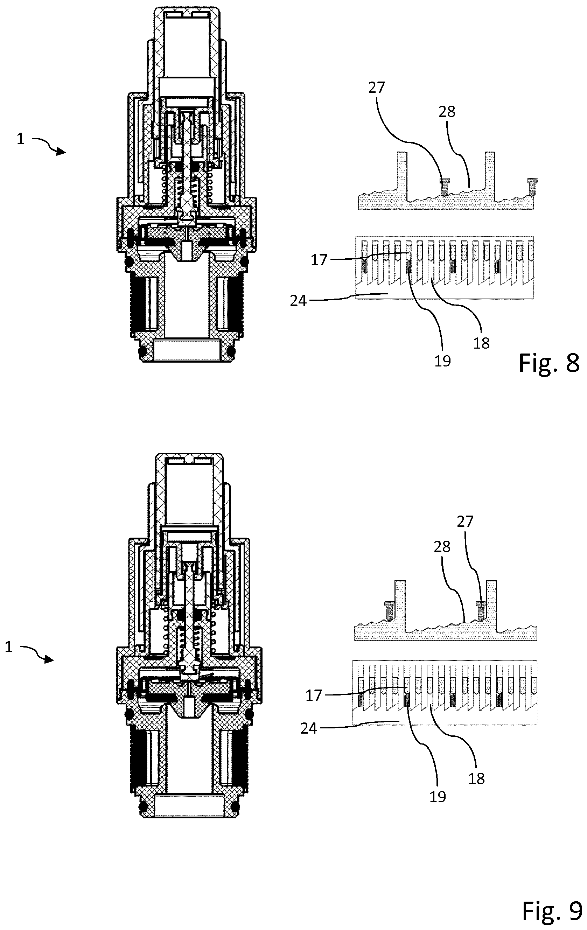

Wird nun das Verstellteil 14 weiter verstellt, bis das Anschlagelement 27 in der Position gemäß Figur 9 auf der Anschlaglinie 28 angeordnet ist, so wird das Handbedienelement 11 in die am weitesten unten gestellte Position gezwungen. Auch hier führt das Federelement 26 dazu, dass der Stößel 25 dem folgt, sodass die Schaltmembran 5 den Ventilsitz 6 noch weiter schließt. Es ist somit ein weiterer zwischengelagerter Gleichgewichtszustand bildbar oder es ist sogar ein Punkt erreicht, in dem der Ventilsitz 6 vollständig verschlossen ist.

Die Anschlaglinie 28 wird an ihren Enden jeweils durch einen Drehanschlag 33 begrenzt, der mit dem Anschlagelement 27 zusammenwirkt. Der Drehanschlag 33 bildet zusätzlich ein Führungsmittel, welches das Handbedienelement 11 drehfest führt.

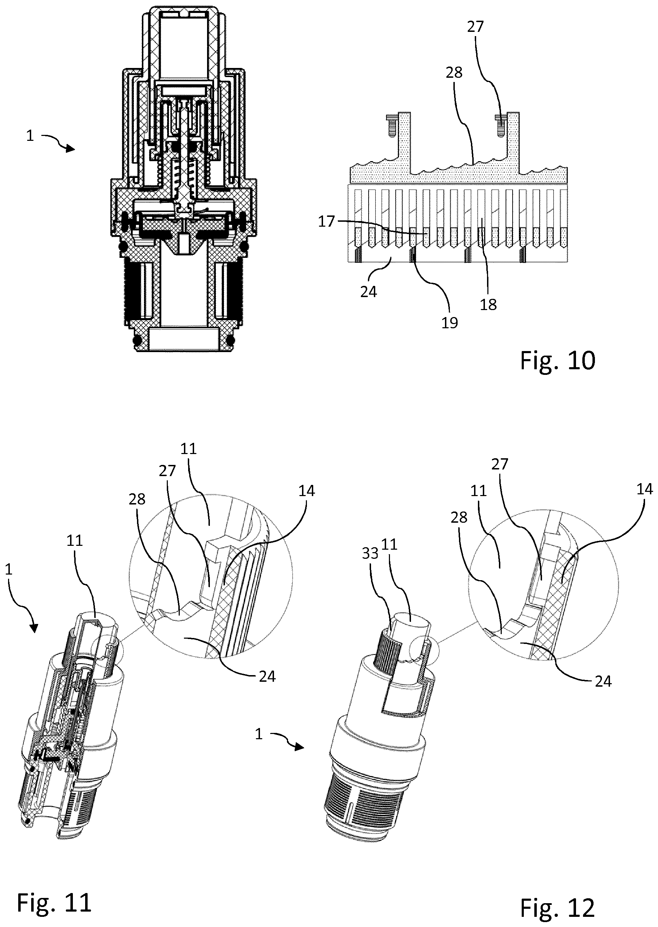

Figur 10 zeigt das bereits beschriebene Umschalten von einer Führungsbahn 18 in die benachbarte Führungsbahn 18.

Es ist ersichtlich, dass das Handbedienelement 11 bereits gedrückt ist, sodass der Steuerungsvorsprung 19 aus der Führungsbahn 18 herausgedrängt ist.

Da das Innenteil 23 federbeaufschlagt ist, führt dies dazu, dass die Steuervorsprünge 19 an den Schrägen 30 der Führungsvorsprünge 17 in die Schrägen 32 zwischen zwei benachbarten Führungsbahnen und von dort nach einer Entlastung des Handbedienelements 11 und somit einer Rückbewegung der Führungsvorsprünge 17 nach oben in die benachbarte Führungsbahn 18 gezwungen werden.

Die gezeigte Ausführungsform der Anschlaglinie 28 als gewellte Linie dient dazu, eine Verschiebung des Anschlagelements 27 auf der Anschlaglinie 28 von außen haptisch zu erfassen. Es sind auch andere Ausgestaltungen der Anschlaglinie 28, beispielsweise als unterbrochene Linie oder als glatte durchgehende ebene Linie mit einer konstanten Steigung oder andere Formen, realisierbar.

Beispielsweise kann bei einem Ausführungsbeispiel die Anschlaglinie 28 an dem drehbaren Verstellteil 14 und das Anschlagelement 27 an dem feststehenden aber druckbetätigbaren Handbedienelement 11 ausgebildet sein.

An dem Verstellteil 14 ist außenseitig, vorzugsweise umlaufend, ein Greifbereich 34 ausgebildet. Das Verstellteil 14 ist somit gut greifbar.

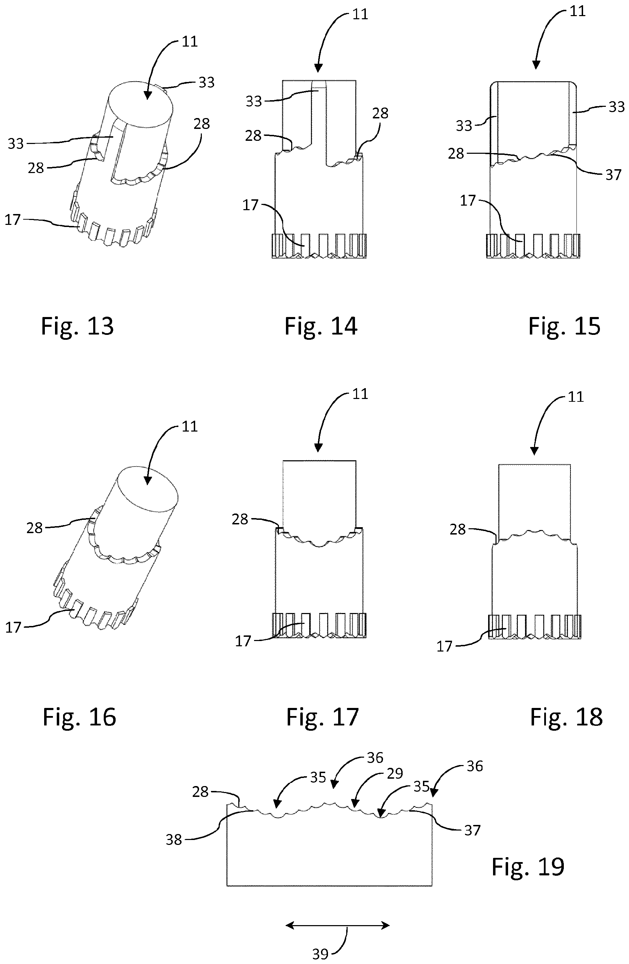

Die Figuren 13 bis 15 zeigen das Handbedienelement 11 aus den Figuren 1 bis 12 in weiteren Ansichten.

Das Handbedienelement 11 weist zwei Drehanschläge 33 auf, die an einander gegenüberliegenden Seiten ausgebildet sind. Diese Drehanschläge 33 begrenzen die Verstellbewegung des Verstellteils 14 in beiden Endpositionen der Verstellrichtung 39.

Die Drehanschläge 33 begrenzen somit beidseits die Anschlaglinie 28, die einen ansteigenden Abschnitt 37 aufweist.

Im Übrigen gelten zu den Figuren 13 bis 15 die zuvor gegebenen Erläuterungen.

Die Figuren 16 bis 19 zeigen ein weiteres Beispiel eines Handbedienelements 11, das beispielsweise bei der Ausführung gemäß den Figuren 1 bis 12 statt des dort gezeigten Handbedienelements 11 eingesetzt werden kann.

Dieses Handbedienelement 11 weist eine anschlagfrei umlaufende Anschlaglinie 28 auf.

Diese Anschlaglinie ist in zwei ansteigende Abschnitte 37 und zwei abfallenden Abschnitte 38 unterteilt, die aufeinander folgen und zwischen sich untere Umkehrpunkte 35 und obere Umkehrpunkte 36 einschließen.

Bei weiteren Ausführungsbeispielen sind andere Anzahlen von Umkehrpunkten und/oder Abschnitten, insbesondere die Kombination mit Drehanschlägen, realisiert.

Bei einer erfindungsgemäßen Ventilbetätigungsvorrichtung 1 wird somit vorgeschlagen, eine bistabile Mechanik 13, mit welcher ein Hilfsventil 7 eines druckbetätigbaren Hauptventils 2 ansteuerbar ist, so einzurichten, dass zumindest ein Anschlagpunkt für eine Offenstellung des Hauptventils 2 durch eine Drehbewegung eines Verstellteils 14 um ein Handbedienelement 11 für das Hilfsventil 7 zu verstellen.

### Bezugszeichenliste

- 1: Ventilbetätigungsvorrichtung
- 2: Hauptventil
- 3: Zulauf
- 4: Ablauf
- 5: Schaltmembran
- 6: Ventilsitz
- 7: Hilfsventil
- 8: Druckkammer
- 9: Entlastungsöffnung
- 10: Ventilelement
- 11: Handbedienelement
- 12: Betätigungsvorrichtung
- 13: bistabile Mechanik
- 14: Verstellteil
- 15: Drehachse
- 16: Gehäuseteil
- 17: Führungsvorsprung
- 18: Führungsbahn
- 19: Steuervorsprung
- 20: Rückstellfeder
- 21: Anschlag
- 22: Anschlag
- 23: Innenteil
- 24: Zwischenteil
- 25: Stößel
- 26: Federelement
- 27: Anschlagelement
- 28: Anschlaglinie
- 29: Segment
- 30: Schräge von 17
- 31: Schräge von 19
- 32: Schräge zwischen zwei Führungsbahnen 18
- 33: Drehanschlag
- 34: Greifbereich
- 35: Unterer Umkehrpunkt
- 36: Oberer Umkehrpunkt
- 37: Ansteigender Abschnitt
- 38: abfallender Abschnitt
- 39: Verstellrichtung

## Patentansprüche

1. Ventilbetätigungsvorrichtung (1), mit einem Hauptventil (2) und einem Hilfsventil (7), wobei das Hauptventil (2) eine Schaltmembran (5) hat, die zwischen einer Offenstellung und einer Schließstellung mit dem Hilfsventil (7) verstellbar ist, wobei das Hilfsventil (7) mit einem entlang einer Betätigungsrichtung (12) beweglichen Handbedienelement (11) über eine bistabile Mechanik (13) betätigbar ist, wobei eine Schaltposition der bistabilen Mechanik (13), die die Offenstellung der bistabilen Mechanik (13) definiert, durch eine Drehbewegung eines Verstellteils (14) um die Betätigungsrichtung (12) relativ zu dem Handbedienelement (11) einstellbar ist, wobei das Handbedienelement (11) entlang der Betätigungsrichtung (12) linear verschieblich angeordnet ist, **dadurch gekennzeichnet, dass** das Verstellteil (14) das Handbedienelement (11) aufnimmt, und dass am Verstellteil (14) außenseitig ein Greifbereich (34) ausgebildet ist.

2. Ventilbetätigungsvorrichtung (1) nach Anspruch 1, **dadurch gekennzeichnet, dass** die bistabile Mechanik (13) eine Paarung eines Anschlagelements (27) und einer unterschiedliche Anschlagpositionen bereitstellenden Anschlaglinie (28) aufweist, die zur Definition der Offenstellung zusammenwirken und dass das Anschlagelement (27) am Handbedienelement und die Anschlagslinie (28) an dem Verstellteil (14) ausgebildet ist.

3. Ventilbetätigungsvorrichtung (1) nach einem der vorangehenden Ansprüche, **dadurch gekennzeichnet, dass** das Verstellteil (14) hülsenförmig ausgebildet ist.

4. Ventilbetätigungsvorrichtung (1) nach einem der vorangehenden Ansprüche, **dadurch gekennzeichnet, dass** das Verstellteil (14) drehbar an einem die bistabile Mechanik (13) aufnehmenden Gehäuseteil (16) angeordnet ist.

5. Ventilbetätigungsvorrichtung (1) nach einem der vorangehenden Ansprüche, **dadurch gekennzeichnet, dass** das Verstellteil (14) und das Handbedienelement (11) unabhängig voneinander beweglich sind.

6. Ventilbetätigungsvorrichtung (1) nach einem der vorangehenden Ansprüche, **dadurch gekennzeichnet, dass** das Handbedienelement (11) drehfest geführt ist.

7. Ventilbetätigungsvorrichtung (1) nach Anspruch 2, **dadurch gekennzeichnet, dass** mit dem Verstellteil (14) eine Relativposition des Anschlagelements (27) an der Anschlaglinie (28) verstellbar ist.

8. Ventilbetätigungsvorrichtung (1) nach Anspruch 2, **dadurch gekennzeichnet, dass** die Anschlaglinie (28) unterbrechungsfrei und/oder gestuft ausgebildet ist.

9. Ventilbetätigungsvorrichtung (1) nach Anspruch 2, **dadurch gekennzeichnet, dass** wenigstens ein Drehanschlag (33), vorzugsweise wenigstens zwei Drehanschläge (33), für eine Verstellrichtung der Relativposition ausgebildet ist/sind, insbesondere zu einer vorzugsweise beidseitigen Begrenzung einer oder der Anschlaglinie (28) in der Verstellrichtung (39) der Relativposition, oder dass die Anschlaglinie (28) umlaufend ausgebildet ist, insbesondere wobei die Anschlaglinie (28) wenigstens einen unteren Umkehrpunkt (35) und/oder wenigstens einen oberen Umkehrpunkt (36) definiert und/oder wenigstens einen ansteigenden Abschnitt (37) und/oder wenigstens einen abfallenden Abschnitt (38) aufweist.

10. Ventilbetätigungsvorrichtung (1) nach Anspruch 2, **dadurch gekennzeichnet, dass** die Anschlaglinie (28) einen Abschnitt einer um die Betätigungsrichtung umlaufenden Schraubenlinie beschreibt.

11. Ventilbetätigungsvorrichtung (1) nach einem der vorangehenden Ansprüche, **dadurch gekennzeichnet, dass** die bistabile Mechanik (13) als Kugelschreibermechanik ausgebildet ist, insbesondere wobei mit dem Verstellteil (14) eine Position des oder eines Anschlags für eine Arbeitsbewegung der Kugelschreibermechanik einstellbar ist.

## Claims

1. Valve actuation device (1) having a main valve (2) and having an auxiliary valve (7), wherein the main valve (2) has a switching diaphragm (5) which can be adjusted between an open position and a closed position by the auxiliary valve (7), wherein the auxiliary valve (7) can be actuated, via a bistable mechanism (13), by a manual operating element (11) which can be moved along an actuation direction (12), wherein a switching position of the bistable mechanism (13) that defines the open position of the bistable mechanism (13) can be set by way of a rotational movement of an adjustment part (14) about the actuation direction (12) relative to the manual operating element (11), wherein the manual operating element (11) is arranged so as to be displaceable linearly along the actuation direction (12), **characterized in that** the adjustment part (14) receives the manual operating element (11), and **in that** a grip region (34) is formed on the outer side of the adjustment part (14).

2. Valve actuation device (1) according to Claim 1, **characterized in that** the bistable mechanism (13) has a pairing of a stop element (27) and a stop line (28) providing different stop positions, which interact to define the open position, and **in that** the stop element (27) is formed on the manual operating element and the stop line (28) is formed on the adjustment part (14).

3. Valve actuation device (1) according to either of the preceding claims, **characterized in that** the adjustment part (14) is of sleeve-like form.

4. Valve actuation device (1) according to one of the preceding claims, **characterized in that** the adjustment part (14) is arranged rotatably on a housing part (16) which receives the bistable mechanism (13).

5. Valve actuation device (1) according to one of the preceding claims, **characterized in that** the adjustment part (14) and the manual operating element (11) can be moved independently of one another.

6. Valve actuation device (1) according to one of the preceding claims, **characterized in that** the manual operating element (11) is guided in a rotationally fixed manner.

7. Valve actuation device (1) according to Claim 2, **characterized in that** a relative position of the stop element (27) on the stop line (28) can be adjusted by the adjustment part (14).

8. Valve actuation device (1) according to Claim 2, **characterized in that** the stop line (28) is formed without interruptions and/or in a stepped manner.

9. Valve actuation device (1) according to Claim 2, **characterized in that** at least one rotation stop (33), preferably at least two rotation stops (33), is/are formed for an adjustment direction of the relative position, in particular for delimiting, preferably on both sides, a or the stop line (28) in the adjustment direction (39) of the relative position, or **in that** the stop line (28) is of encircling form, in particular wherein the stop line (28) defines at least one lower reversal point (35) and/or at least one upper reversal point (36) and/or has at least one ascending section (37) and/or at least one descending section (38).

10. Valve actuation device (1) according to Claim 2, **characterized in that** the stop line (28) describes a section of a helical line running about the actuation direction.

11. Valve actuation device (1) according to one of the preceding claims, **characterized in that** the bistable mechanism (13) is in the form of a ballpoint pen mechanism, in particular wherein a position of the or a stop for a working movement of the ballpoint pen mechanism can be set by the adjustment part (14) .

## Revendications

1. Dispositif d'actionnement de vanne (1) avec une vanne principale (2) et une vanne auxiliaire (7), dans lequel la vanne principale (2) a une membrane de commutation (5) qui peut être réglée entre une position d'ouverture et une position de fermeture avec la vanne auxiliaire (7), dans lequel la vanne auxiliaire (7) peut être actionnée avec un élément de commande manuelle (11) mobile le long d'une direction d'actionnement (12) par le biais d'un mécanisme bistable (13), dans lequel une position de commutation du mécanisme bistable (13) qui définit la position d'ouverture du mécanisme bistable (13) peut être réglée par un mouvement de rotation d'une pièce de réglage (14) autour d'une direction d'actionnement (12) par rapport à l'élément de commande manuelle (11), et dans lequel l'élément de commande manuelle (11) est disposé de manière coulissante linéairement le long de la direction d'actionnement (12), **caractérisé en ce que** la pièce de réglage (14) accueille l'élément de commande manuelle (11) et qu'une zone de préhension (34) est formée sur la partie de réglage (14) sur la face extérieure.

2. Dispositif d'actionnement de vanne (1) selon la revendication 1, **caractérisé en ce que** le mécanisme bistable (13) présente un appariement d'un élément de butée (27) et d'une ligne de butée (28) offrant différentes positions de butée qui coopèrent pour définir la position d'ouverture, et que l'élément de butée (27) est formé sur l'élément de commande manuelle et la ligne de butée (28) sur la pièce de réglage (14).

3. Dispositif d'actionnement de vanne (1) selon une des revendications précédentes, **caractérisé en ce que** la pièce de réglage (14) est en forme de manchon.

4. Dispositif d'actionnement de vanne (1) selon une des revendications précédentes, **caractérisé en ce que** la pièce de réglage (14) est disposée de façon
pivotante sur une pièce de boîtier (16) accueillant le mécanisme bistable (13).

5. Dispositif d'actionnement de vanne (1) selon une des revendications précédentes, **caractérisé en ce que** la pièce de réglage (14) et l'élément de commande manuelle (11) sont mobiles indépendamment l'un de l'autre.

6. Dispositif d'actionnement de vanne (1) selon une des revendications précédentes, **caractérisé en ce que** l'élément de commande manuelle (11) est guidé de manière fixe en rotation.

7. Dispositif d'actionnement de vanne (1) selon la revendication 2, **caractérisé en ce qu'**avec la pièce de réglage (14), une position relative de l'élément de butée (27) sur la ligne de butée (28) peut être réglée.

8. Dispositif d'actionnement de vanne (1) selon la revendication 2, **caractérisé en ce que** la ligne de butée (28) est configurée de façon ininterrompue et/ou étagée.

9. Dispositif d'actionnement de vanne (1) selon la revendication 2, **caractérisé en ce qu'**au moins une butée rotative (33), de préférence au moins deux butées rotatives (33), et/sont configurée(s) pour une direction de réglage de la position relative, en particulier en vue d'une limitation de préférence bilatérale d'une ou de la ligne de butée (28) dans la direction de réglage (39) de la position relative, ou que la ligne de butée (28) est configurée de façon périphérique, la ligne de butée (28) définissant en particulier au moins un point d'inversion inférieur (35) et/ou au moins un point d'inversion supérieur (36) et/ou présentant au moins un segment ascendant (37) et/ou au moins un segment descendant (38).

10. Dispositif d'actionnement de vanne (1) selon la revendication 2, **caractérisé en ce que** la ligne de butée (28) décrit un segment d'une ligne hélicoïdale tournant autour de la direction d'actionnement.

11. Dispositif d'actionnement de vanne (1) selon une des revendications précédentes, **caractérisé en ce que** le mécanisme bistable (13) est configuré comme un mécanisme de stylo à bille, la pièce de réglage (14) permettant en particulier de régler une position de la ou d'une butée pour un mouvement de travail du mécanisme de stylo à bille.
